(19) Europäisches Patentamt
European Patent Office
Office européen des brevets

(11) **EP 4 685 114 A1**

(12) **EUROPEAN PATENT APPLICATION**
published in accordance with Art. 153(4) EPC

(43) Date of publication:
**28.01.2026 Bulletin 2026/05**

(21) Application number: **24775000.3**

(22) Date of filing: **22.03.2024**

(51) International Patent Classification (IPC):
*C01G 49/00* $^{(2006.01)}$  *C09C 1/02* $^{(2006.01)}$
*C09C 1/22* $^{(2006.01)}$  *C09C 1/40* $^{(2006.01)}$

(52) Cooperative Patent Classification (CPC):
**C01G 49/00; C09C 1/02; C09C 1/22; C09C 1/40**

(86) International application number:
**PCT/JP2024/011448**

(87) International publication number:
**WO 2024/195867 (26.09.2024 Gazette 2024/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **22.03.2023 JP 2023045378**

(71) Applicant: **Powdertech Co., Ltd.
Kashiwa-shi, Chiba 277-8557 (JP)**

(72) Inventors:
• **ISHIKAWA, Makoto**
  **Kashiwa-shi, Chiba 277-8557 (JP)**
• **HANYU, Shinya**
  **Kashiwa-shi, Chiba 277-8557 (JP)**
• **UEMURA, Tetsuya**
  **Kashiwa-shi, Chiba 277-8557 (JP)**

(74) Representative: **Vossius & Partner
Patentanwälte Rechtsanwälte mbB
Siebertstrasse 3
81675 München (DE)**

(54) **BLACK COMPOSITE OXIDE PARTICLES**

(57) An object of the present invention is to provide a black composite oxide particle having high safety, excellent blackness, low magnetization, and a small environmental variation in volume resistivity. A black composite oxide particle according to the present invention contains: Fe, Mg, and Al as metal components, in which when a content of Fe is W1 wt%, a content of Mg is W2 wt%, and a content of Al is W3 wt%, $42 \leq W1 \leq 60$, $4 \leq W2 \leq 11$, and $4 \leq W3 \leq 11$ are satisfied, a full width at half maximum of a diffraction peak based on a (311) plane representing a spinel structure in X-ray crystal structure analysis is 0.100° or more and 0.190° or less, and Cl is further contained in an amount of 5 ppm or more and 100 ppm or less.

**EP 4 685 114 A1**

**Description**

TECHNICAL FIELD

The present invention relates to a black composite oxide particle suitable as a black pigment mainly for paints, printing inks, toners, rubber/plastics, and ceramics.

BACKGROUND ART

Black pigments used in applications such as paints, printing inks, toners, rubber/plastics, and ceramics are required to have properties such as blackness, coloring power, and hiding power and to be inexpensive. As inorganic black pigments, carbon black, iron oxide-based pigments represented by magnetite, and other composite oxide pigments are widely used.

These inorganic black pigments are generally required to have a particle diameter of nano level to submicron, and in particular, in the case of carbon black, various alternative pigments have been studied from the viewpoint of safety.

Patent Literature 1 proposes a black composite oxide particle containing a composite oxide containing Fe, Mg, and Al as metal components, in which the amount of Fe is 30 mass% to 55 mass%, an atomic ratio of $Fe^{3+}/Fe^{2+}$ is 0.8 to 10, an amount of Mg is 1 mass% to 10 mass%, and an amount of Al is 1 mass% to 10 mass%. Patent Literature 2 proposes a Mg-containing black iron oxide particle containing a composition represented by $Mg_xFe_yO(Fe_2O_3)_{1+z}$ (where $0.3 < x < 1$, $0 < y < 0.7$, $x + y = 1$, and $0 < z < 0.5$), and having an average particle diameter of 0.01 $\mu$m to 0.5 $\mu$m. Patent Literature 3 proposes a composite oxide black pigment which is a composite oxide of main component metals containing copper, manganese, and aluminum, in which a content ratio of each metal with respect to a total of metal elements is 25 mol% to 45 mol% for copper, 25 mol% to 70 mol% for manganese, and 2 mol% to 40 mol% for aluminum, and which does not substantially contain chromium, cobalt, and nickel.

PRIOR ART DOCUMENTS

PATENT LITERATURE

    Patent Literature 1: JP2003-238164A
    Patent Literature 2: JP2003-286030A
    Patent Literature 3: JP2015-98509A

SUMMARY OF INVENTION

PROBLEM TO BE SOLVED BY THE INVENTION

However, the inorganic oxide pigment as described in Patent Literatures 1 to 3 has a problem in blackness and cohesiveness by a magnetic force as compared with carbon black. On the other hand, the inorganic oxide pigment is more likely to have a higher resistance than carbon black, and when used in a toner, the resistance and chargeability are likely to be controlled to an appropriate level, but the chargeability of the toner needs to have a small variation at a high temperature and a high humidity or at a low temperature and a low humidity. In particular, in the case of a black toner, since an addition amount of a pigment as a colorant is large, it is required to prevent an environmental variation in volume resistivity in order to reduce an influence on an environmental variation in charge amount.

Therefore, an object of the present invention is to provide a black composite oxide particle having high safety, excellent blackness, low magnetization, and a small environmental variation in volume resistivity.

MEANS FOR SOLVING THE PROBLEM

As a result of intensive studies on the above problems, the present inventors have found that a black composite oxide particle having high safety, excellent blackness, low magnetization, and a small environmental variation in volume resistivity can be obtained by containing Fe, Mg, and Al as metal components at specific contents, having a full width at half maximum representing crystallinity in a specific range, and containing Cl at a specific content.

That is, the present invention provides a black composite oxide particle containing:

    Fe, Mg, and Al as metal components, in which

when a content of Fe is W1 wt%, a content of Mg is W2 wt%, and a content of Al is W3 wt%, the following formulas:

$$42 \leq W1 \leq 60,$$

$$4 \leq W2 \leq 11,$$

and

$$4 \leq W3 \leq 11$$

are satisfied,
a full width at half maximum of a diffraction peak based on a (311) plane representing a spinel structure in X-ray crystal structure analysis is 0.100° or more and 0.190° or less, and
Cl is further contained in an amount of 5 ppm or more and 100 ppm or less.

The black composite oxide particle according to the present invention preferably satisfies the following formulas:

$$0.07 \leq W2/W1 \leq 0.26,$$

$$0.07 \leq W3/W1 \leq 0.26,$$

and

$$0.4 \leq W3/W2 \leq 2.3.$$

In the black composite oxide particle according to the present invention, it is preferable that

with a laser diffraction scattering method, a volume cumulative 50% particle diameter D50 is 0.05 $\mu$m or more and 0.7 $\mu$m or less, and a volume cumulative 90% particle diameter D90 is 1.0 $\mu$m or less, and
the volume cumulative 50% particle diameter D50 and a BET specific surface area S satisfy the following formula: $1.3935 \times D50^{-1.144} \leq S \leq 3.5303 \times D50^{-0.974}$.

The black composite oxide particle according to the present invention preferably has a blackness L value of 20 or less, a hue a value of 2.0 or less, and a hue b value of 2.0 or less, as measured using a color difference meter in accordance with JIS K5101-1991.
The black composite oxide particle according to the present invention preferably has a saturation magnetization Ms of 30 Am$^2$/kg or less in a load magnetic field of 79.6 kA/m.
The black composite oxide particle according to the present invention preferably has a common logarithm value of volume resistivity RvH ($\Omega$cm) of 7.0 or more at a high temperature and a high humidity (30°C and relative humidity of 80%).
The black composite oxide particle according to the present invention preferably has a volume resistivity environmental variation ratio ($\log_{10}RvL/\log_{10}RvH$) of 1.00 or more and 1.25 or less, which is a ratio of a common logarithm value of volume resistivity RvL at a low temperature and a low humidity (10°C and relative humidity of 20%) to a common logarithm value of volume resistivity RvH at a high temperature and a high humidity (30°C and relative humidity of 80%).

EFFECTS OF INVENTION

With the black composite oxide particle according to the present invention, it is possible to provide a black composite oxide particle having high safety, excellent blackness, low magnetization, and a small environmental variation in volume resistivity.

EMBODIMENTS FOR CARRYING OUT THE INVENTION

In the present invention, a combination of two or more preferred embodiments is a more preferred embodiment.
A black composite oxide particle according to the present invention contains:

Fe, Mg, and Al as metal components, in which
when a content of Fe is W1 wt%, a content of Mg is W2 wt%, and a content of Al is W3 wt%, the following formulas:

$$42 \leq W1 \leq 60,$$

$$4 \leq W2 \leq 11,$$

and

$$4 \leq W3 \leq 11$$

are satisfied,
a full width at half maximum of a diffraction peak based on a (311) plane representing a spinel structure in X-ray crystal structure analysis is 0.100° or more and 0.190° or less, and
Cl is further contained in an amount of 5 ppm or more and 100 ppm or less.

The black composite oxide particle according to the present invention is composed of Fe, Mg, and Al as metal components serving as main components. Note that, as oxides of the respective elements, it is known that, in the case of Fe alone, magnetite ($Fe_3O_4$) known as a black pigment is generated, but when Mg is present therein, magnesium ferrite ($MgFe_2O_4$) of brown, etc. are generated by reacting with Fe, and when Al is present therein, hercynite ($FeAl_2O_4$), which is a blackish oxide, etc. are generated. However, in the case where three types of elements of Fe, Mg, and Al are used, since these elements are present in a solid solution state in a spinel structure, it is important to adjust a ratio thereof to a specific ratio in controlling blackness and magnetization.

Therefore, it is important that the black composite oxide particle according to the present invention contains Fe, Mg, and Al as metal components, and satisfies, when a content of Fe is W1 wt%, a content of Mg is W2 wt%, and a content of Al is W3 wt%, the following formulas:

$$42 \leq W1 \leq 60,$$

$$4 \leq W2 \leq 11,$$

and

$$4 \leq W3 \leq 11.$$

The contents of Fe, Mg, and Al described above each indicate the content with respect to the entire black composite oxide particle.

In the black composite oxide particle according to the present invention, when the content of Fe is less than 42 wt%, the magnetization tends to be low but the blackness tends to be reduced. In addition, when the content of Fe is more than 60 mass%, the blackness tends to be high but the magnetization tends to be increased. Therefore, from the viewpoint of achieving both the blackness and the magnetization, it is important to satisfy $42 \leq W1 \leq 60$. W1 is preferably 45 or more, and more preferably 47 or more. In addition, W1 is preferably 57 or less, and more preferably 55 or less.

In a preferred embodiment, it is preferable to satisfy $42 \leq W1 \leq 57$, and more preferable to satisfy $42 \leq W1 \leq 55$.

In one preferred embodiment, it is preferable to satisfy $45 \leq W1 \leq 60$, more preferable to satisfy $45 \leq W1 \leq 57$, and still more preferable to satisfy $45 \leq W1 \leq 55$.

In one preferred embodiment, it is preferable to satisfy $47 \leq W1 \leq 60$, more preferable to satisfy $47 \leq W1 \leq 57$, and still more preferable to satisfy $47 \leq W1 \leq 55$.

In the black composite oxide particle according to the present invention, when the content of Mg is less than 4 wt%, the blackness tends to be high but the magnetization tends to be increased. In addition, when the content of Mg is more than 11 mass%, the blackness tends to be low but the magnetization tends to be reduced. Therefore, from the viewpoint of achieving both the blackness and the magnetization, it is important to satisfy $4 \leq W2 \leq 11$. W2 is preferably 5 or more, and more preferably 6 or more. In addition, W2 is preferably 10 or less, and more preferably 9 or less.

In a preferred embodiment, it is preferable to satisfy $4 \leq W2 \leq 10$, and more preferable to satisfy $4 \leq W2 \leq 9$.

In one preferred embodiment, it is preferable to satisfy $5 \leq W2 \leq 11$, more preferable to satisfy $5 \leq W2 \leq 10$, and still more preferable to satisfy $5 \leq W2 \leq 9$.

In a preferred embodiment, it is preferable to satisfy $6 \leq W2 \leq 11$, more preferable to satisfy $6 \leq W2 \leq 10$, and still

more preferable to satisfy $6 \leq W2 \leq 9$.

In the black composite oxide particle according to the present invention, when the content of Al is less than 4 wt%, the blackness tends to be high but the magnetization tends to be increased. In addition, when the content of Al is more than 11 mass%, the blackness tends to be low but the magnetization tends to be reduced. Therefore, from the viewpoint of achieving both the blackness and the magnetization, it is important to satisfy $4 \leq W3 \leq 11$. W3 is preferably 5 or more, and more preferably 6 or more. In addition, W3 is preferably 10 or less, and more preferably 9 or less.

In a preferred embodiment, it is preferable to satisfy $4 \leq W3 \leq 10$, and more preferable to satisfy $4 \leq W3 \leq 9$.

In a preferred embodiment, it is preferable to satisfy $5 \leq W3 \leq 11$, more preferable to satisfy $5 \leq W3 \leq 10$, and still more preferable to satisfy $5 \leq W3 \leq 9$.

In one preferred embodiment, it is preferable to satisfy $6 \leq W3 \leq 11$, more preferable to satisfy $6 \leq W3 \leq 10$, and still more preferable to satisfy $6 \leq W3 \leq 9$.

In the black composite oxide particle according to the present invention, it is preferable to further adjust a weight ratio of Mg and Al to Fe and a weight ratio of Al to Mg to achieve both the blackness and the magnetization in a more well-balanced manner. Specifically, it is preferable to satisfy the following formulas:

$$0.07 \leq W2/W1 \leq 0.26,$$

$$0.07 \leq W3/W1 \leq 0.26,$$

and

$$0.4 \leq W3/W2 \leq 2.3.$$

Within this range, both the blackness and the magnetization can be achieved in a well-balanced manner. W2/W1 is more preferably 0.10 or more, and is more preferably 0.20 or less. W3/W1 is more preferably 0.10 or more, and is more preferably 0.20 or less. W3/W2 is more preferably 0.6 or more, and is more preferably 2.0 or less.

In a preferred embodiment, it is preferable to satisfy $0.07 \leq W2/WI \leq 0.20$.

In a preferred embodiment, it is preferable to satisfy $0.10 \leq W2/W1 \leq 0.26$, and more preferable to satisfy $0.10 \leq W2/W1 \leq 0.20$.

In a preferred embodiment, it is preferable to satisfy $0.07 \leq W3/W1 \leq 0.20$.

In a preferred embodiment, it is preferable to satisfy $0.10 \leq W3/W1 \leq 0.26$, and more preferable to satisfy $0.10 \leq W3/W1 \leq 0.20$.

In a preferred embodiment, it is preferable to satisfy $0.4 \leq W3/W2 \leq 2.0$.

In a preferred embodiment, it is preferable to satisfy $0.6 \leq W3/W2 \leq 2.3$, and more preferable to satisfy $0.6 \leq W3/W2 \leq 2.0$.

It is important that the black composite oxide particle according to the present invention further contains Cl in addition to Fe, Mg, and Al. However, when the content of Cl is less than 5 ppm, an environmental variation in volume resistivity at a low temperature and a low humidity tends to be relatively large. In addition, when the content of Cl is more than 100 ppm, the environmental variation in volume resistivity at a high temperature and a high humidity tends to be relatively large. Therefore, from the viewpoint of more stabilizing the environmental variation in volume resistivity, it is important that the content of Cl is 5 ppm or more and 100 ppm or less. The content of Cl is preferably 10 ppm or more, and more preferably 20 ppm or more. In addition, the content of Cl is preferably 80 ppm or less, and more preferably 50 ppm or less.

In a preferred embodiment, the content of Cl in the black composite oxide particle is preferably 5 ppm or more and 80 ppm or less, and more preferably 5 ppm or more and 50 ppm or less.

In a preferred embodiment, the content of Cl in the black composite oxide particle is preferably 10 ppm or more and 100 ppm or less, more preferably 10 ppm or more and 80 ppm or less, and still more preferably 10 ppm or more and 50 ppm or less.

In a preferred embodiment, the content of Cl in the black composite oxide particle is preferably 20 ppm or more and 100 ppm or less, more preferably 20 ppm or more and 80 ppm or less, and still more preferably 20 ppm or more and 50 ppm or less.

In the black composite oxide particle according to the present invention, it is important that the full width at half maximum of the diffraction peak based on the (311) plane representing the spinel structure in the X-ray crystal structure analysis is 0.100° or more and 0.190° or less. When the full width at half maximum is less than 0.100°, an amount of lattice defects in the spinel structure is small, and the structure is close to a single spinel crystal structure, so that the magnetization tends to be high and the resistance tends to be low. When the full width at half maximum is larger than 0.190°, the blackness tends to be reduced. The full width at half maximum is more preferably 0.120° or more and 0.170° or less. Note that, the full width at half maximum of the diffraction peak based on the (311) plane representing the spinel structure can be appropriately adjusted based on a production method such as a wet method or a dry method, a composition ratio of metal components, a sintering temperature, a sintering atmosphere, and the like.

In a preferred embodiment, the full width at half maximum is preferably 0.100° or more and 0.170° or less.

In a preferred embodiment, the full width at half maximum is preferably 0.120° or more and 0.190° or less, and more preferably 0.120° or more and 0.170° or less.

In the black composite oxide particle according to the present invention, it is preferable that

with a laser diffraction scattering method, a volume cumulative 50% particle diameter D50 is 0.05 $\mu$m or more and 0.7 $\mu$m or less, and a volume cumulative 90% particle diameter D90 is 1.0 $\mu$m or less, and
the volume cumulative 50% particle diameter D50 and a BET specific surface area S satisfy the following formula: $1.3935 \times D50^{-1.144} \leq S \leq 3.5303 \times D50^{-0.974}$.

In the black composite oxide particle according to the present invention, a particle size distribution is preferably adjusted. Specifically, the volume cumulative 50% particle diameter D50 is preferably 0.05 $\mu$m or more and 0.7 $\mu$m or less, and more preferably 0.10 $\mu$m or more and 0.5 $\mu$m or less. When D50 is 0.05 $\mu$m or more, desired blackness is likely to be obtained. In addition, when D50 is 0.7 $\mu$m or less, the black composite oxide particle is likely to be dispersed in a toner having a particle diameter of several $\mu$m, and desired color tone and properties of the toner are likely to be obtained.

In a preferred embodiment, D50 is more preferably 0.05 $\mu$m or more and 0.5 $\mu$m or less.

In a preferred embodiment, D50 is more preferably 0.10 $\mu$m or more and 0.7 $\mu$m or less, and still more preferably 0.10 $\mu$m or more and 0.5 $\mu$m or less.

The volume cumulative 90% particle diameter D90 is preferably 1.0 $\mu$m or less, and more preferably 0.7 $\mu$m or less. When D90 is 1.0 $\mu$m or less, the black composite oxide particle is likely to be dispersed in a toner having a particle diameter of several $\mu$m, and desired color tone and properties of the toner are likely to be obtained. A lower limit of D90 can be, for example, 0.3 $\mu$m or more.

In a preferred embodiment, D90 is preferably 0.3 $\mu$m or more and 1.0 $\mu$m or less, and more preferably 0.3 $\mu$m or more and 0.7 $\mu$m or less.

Note that, the particle size distribution for calculating D50 and D90 can be measured by using a laser diffraction scattering method.

In the black composite oxide particle according to the present invention, the volume cumulative 50% particle diameter D50 and a BET specific surface area S preferably satisfy the following formula: $1.3935 \times D50^{-1.144} \leq S \leq 3.5303 \times D50^{-0.974}$. Since particles generally have a particle size distribution and cannot completely eliminate surface unevenness, it is technically difficult to make the BET specific surface area smaller than the above lower limit. When the BET specific surface area is equal to or less than the above upper limit, the number of pores is not too large with respect to the particle diameter, and the particles are less susceptible to a change in humidity or the like. In addition, in the case where the particles are used after being subjected to a surface treatment or the like for hydrophilization or hydrophobization, since the strength is sufficient, the particles are less likely to be broken, and the untreated portion is less likely to be exposed, and thus the properties are likely to be stabilized.

The black composite oxide particle according to the present invention preferably has an L value of 20 or less, an a value of 2.0 or less, and a b value of 2.0 or less, when measured for the blackness and the hue using a color difference meter in accordance with JIS K5101-1991. When the L value, the a value, and the b value satisfy the above conditions, the blackness is increased, and the hue is reduced in redness and yellowness, and thus the black composite oxide particle is suitable as a black pigment. The L value is more preferably 19 or less, and still more preferably 17 or less.

The black composite oxide particle according to the present invention has, at a load magnetic field of 79.6 kA/m, a saturation magnetization Ms of preferably 30 Am$^2$/kg or less, and more preferably 25 Am$^2$/kg or less, in consideration of the case where the black composite oxide particle is used in a field where magnetism is not required, such as a non-magnetic toner application.

The black composite oxide particle according to the present invention has a common logarithm value of volume resistivity RvH ($\Omega$cm) of preferably 7.0 or more, and more preferably 7.5 or more at a high temperature and a high humidity (30°C and relative humidity of 80%), from the viewpoint of maintaining the chargeability when added to a toner and particularly preventing a decrease in charge at a high temperature and a high humidity (30°C and relative humidity of 80%). In addition, the black composite oxide particle has a volume resistivity environmental variation ratio ($\log_{10}$RvL/$\log_{10}$RvH) of preferably 1.00 or more and 1.25 or less, and more preferably 1.00 or more and 1.20 or less, which is a ratio of a common logarithm value of volume resistivity RvL ($\Omega$cm) at a low temperature and a low humidity (10°C and relative humidity of 20%) to the common logarithm value of volume resistivity RvH ($\Omega$cm) at a high temperature and a high humidity (30°C and relative humidity of 80%).

The black composite oxide particle according to the present invention is usually produced by a dry method. For example, it can be produced by measuring predetermined amounts of raw materials, pulverizing and mixing the raw materials to obtain a slurry, granulating the slurry, and sintering the slurry at 1000°C or higher and 1300°C or lower in an inert atmosphere or a weakly oxidizing atmosphere.

The black composite oxide particle according to the present invention can also be produced by a wet method. However, although there are more crystal nuclei for generating a spinel crystal as compared with the dry method, the reaction at a low temperature makes the crystal less likely to grow, and the crystallinity is low, so that the full width at half maximum of the diffraction peak based on the (311) plane representing the spinel structure tends to increase. Therefore, the blackness is likely to be insufficient, and a change over time is likely to occur. In addition, since the crystals are less likely to grow, many voids are present in the particles, and the BET specific surface area with respect to the particle diameter is likely to increase. Therefore, a change in humidity or the like is likely to be received, or a change over time is caused. Although there is a method in which the particle is produced by a wet method and then sintered, since many crystal nuclei are present, it is difficult to control the spinelization reaction, and the magnetization is too high or the sintering proceeds too much. Therefore, the hardness is greatly increased and it is less likely to reduce the particle diameter. Further, since the particle produced by the wet method has uniform crystal grains, in the case where a magnetic field is applied, magnetic moments are likely to be aligned, and thus high magnetization tends to be easily obtained.

As the raw material of Fe, it is preferable to use $Fe_2O_3$. As the raw material of Mg, it is preferable to use one or two or more compounds selected from $Mg(OH)_2$, MgO, and $MgCO_3$. As the raw material of Al, it is preferable to use $Al_2O_3$. As the raw material of Cl, a chlorine source such as magnesium chloride or sodium chloride can also be used, but since it is a trace amount compared to Fe, Mg, and Al, it is preferable to adjust the content of Cl by Cl which is a trace component contained in each of the above raw materials (particularly, $Fe_2O_3$). Note that, $Fe_2O_3$ is preferably $Fe_2O_3$ produced using iron chloride as a raw material since iron sulfate or $Fe_2O_3$ produced using iron sulfate as a raw material hardly contains Cl and is difficult to adjust to a desired content of Cl. In addition, the content of Cl can also be adjusted based on the sintering temperature and a sintering time.

After weighing appropriate amounts of these raw materials so as to obtain a desired elemental composition, the raw materials are pulverized and mixed for 0.5 hours or longer (preferably 1 hour or longer and 20 hours or shorter) with a ball mill, a vibration mill, or the like, water is added to the pulverized mixture, and the mixture is finely pulverized using a bead mill or the like to obtain a slurry. A degree of pulverization can be controlled by adjusting a diameter of beads used as media, a composition, and a pulverization time. From the viewpoint of uniformly dispersing the raw materials, it is preferable to use fine beads having a particle diameter of 1 mm or less as media. In addition, in order to uniformly disperse the raw materials, pulverization is preferably performed such that a volume average particle diameter (volume cumulative 50% particle diameter D50) of a pulverized product is 2.5 $\mu$m or less, and more preferably 2.0 $\mu$m or less.

Next, a dispersant, a binder, and the like are preferably added to the obtained slurry as necessary to adjust a viscosity thereof to 2 poises or more and 4 poises or less. As the binder, a polyvinyl alcohol (PVA) or a polyvinyl pyrrolidone (PVP) can be used. Then, the slurry having the viscosity adjusted to the above range is sprayed using a spray dryer, followed by drying, to obtain a granulated product.

The obtained granulated product is preferably sintered by being held at a temperature of 1000°C or higher and 1300°C or lower for 2 hours or longer and 6 hours or shorter in an inert atmosphere or a weakly oxidizing atmosphere. The content of Cl can also be controlled based on the sintering temperature and the sintering time. Here, the inert atmosphere or the weakly oxidizing atmosphere means that an oxygen concentration is 0.0 vol% or more and 0.1 vol% (1000 ppm) or less. When the sintering temperature is 1000°C or higher, the spinelization reaction is likely to occur, and thus the blackness is increased. When the sintering temperature is 1300°C or lower, the crystal grain growth in the spinelization does not excessively proceed while maintaining high blackness, the hardness is reduced, and the particle diameter can be easily reduced by pulverization or the like. The sintering temperature is preferably 1100°C or higher and 1250°C or lower, from the viewpoint of the blackness and the hardness.

The obtained sintered product can be pulverized to a desired particle diameter using a dry pulverizer such as a pin mill, a hammer mill, a bead mill, or a jet mill, a wet bead mill, or the like. In the case where wet pulverization is performed, the particle is obtained by drying. In this case, in order to prevent dry aggregation, an aggregation inhibitor such as a surfactant can be used. If necessary, classification is performed using an air classifier or the like to obtain particles having a desired particle size distribution.

The black composite oxide particle according to the present invention as described above has high safety, excellent blackness, low magnetization, and a small environmental variation in volume resistivity. Since it has high safety and excellent blackness, it is suitable as a black pigment for paints, printing inks, toners, rubber/plastics, and ceramics. In addition, the black composite oxide particle according to the present invention has low magnetization and a small environmental variation in volume resistivity, and is thus particularly suitable as a black pigment for a non-magnetic toner as an alternative of carbon black or an environmental load substance-containing oxide pigment having low safety. A toner using the black composite oxide particle according to the present invention can reduce the influence on the natural environment and the human body, and can provide a high-quality printed matter.

EXAMPLES

<Example 1>

$Fe_2O_3$ (16.09 kg, iron chloride-based raw material, content of Cl: 1500 ppm), 4.64 kg of $Mg(OH)_2$, and 4.15 kg of $Al_2O_3$ were weighed and pulverized for 6 hours (until D50 was about 5 $\mu$m) using a dry media mill (vibration mill, 1/8-inch diameter stainless steel beads). Thereafter, water was added, and the mixture was further pulverized for 6 hours using a wet media mill (transverse bead mill, zirconia beads having a diameter of 1 mm). As a result of measuring the particle diameter (primary particle diameter of pulverization) of the slurry using MICROTRAC, D50 was about 2 $\mu$m. To the obtained slurry, an appropriate amount of a dispersant was added, 0.4 wt% of a PVA (10% solution) as a binder based on the solid content was added, and then granulation was performed by using a spray dryer.

Thereafter, the obtained granulated product was held in a tunnel electric furnace at a sintering temperature of 1200°C and an oxygen concentration of 0.0 vol% for 3 hours. At this time, a heating rate was 200°C/hour, and a cooling rate was 150°C/hour. The obtained sintered product was pulverized stepwise using a hammer mill (manufactured by Maekawa Kogyo Co., Ltd.), a pin mill (manufactured by Makino Sangyo Co., Ltd.), and a dynamic mill (manufactured by NIPPON COKE & ENGINEERING. CO., LTD.), and particles having a target particle diameter were classified using an ultrafine powder classifier CNI (manufactured by Nippon Pneumatic Mfg. Co., Ltd.) to obtain a black composite oxide particle.

<Example 2>

A black composite oxide particle was obtained by the same method as in Example 1 except that $Fe_2O_3$ (iron chloride-based raw material, content of Cl: 900 ppm) was used instead of $Fe_2O_3$ used as the raw material in Example 1.

<Example 3>

A black composite oxide particle was obtained by the same method as in Example 1 except that $Fe_2O_3$ (iron chloride-based raw material, content of Cl: 2900 ppm) was used instead of $Fe_2O_3$ used as the raw material in Example 1, and the sintering temperature was changed to 1150°C.

<Examples 4 to 8>

Each black composite oxide particle was obtained by the same method as in Example 1 except that the blending ratio of $Fe_2O_3$, $Mg(OH)_2$, and $Al_2O_3$ used as the raw materials in Example 1 was appropriately changed.

<Comparative Example 1>

A black composite oxide particle was obtained by the same method as in Example 1 except that $Fe_2O_3$ (iron chloride-based raw material, content of Cl: 3600 ppm) was used instead of $Fe_2O_3$ used as the raw material in Example 1, and the sintering temperature was changed to 1150°C.

<Comparative Example 2>

A black composite oxide particle was obtained by the same method as in Example 1 except that $Fe_2O_3$ (iron chloride-based raw material, content of Cl: 900 ppm) was used instead of $Fe_2O_3$ used as the raw material in Example 1, and the sintering temperature was changed to 1300°C.

<Comparative Examples 3 to 9>

Each black composite oxide particle was obtained by the same method as in Example 1 except that the blending ratio of $Fe_2O_3$, $Mg(OH)_2$, and $Al_2O_3$ used as the raw materials in Example 1 was appropriately changed. Note that, in Comparative Example 9, the oxygen concentration during the sintering was 0.5 vol%.

<Comparative Example 10>

A black composite oxide particle was obtained by using a wet method. Specifically, a 12.5 mol/L sodium hydroxide aqueous solution was added to 5 L of a 0.15 mol/L sodium carbonate aqueous solution to adjust the pH to 11, and a solution temperature was raised to 80°C and maintained at this temperature. On the other hand, 2 L of a mixed sulfate aqueous solution containing 0.75 mol/L of ferrous sulfate, 0.10 mol/L of ferric sulfate, 0.5 mol/L of magnesium sulfate, and 0.25 mol/L of aluminum sulfate was prepared, and was charged into the above alkaline aqueous solution containing sodium carbonate in 30 minutes under mixing and stirring.

After completion of the charging, mixing and stirring were continued for 4 hours. The initial temperature and pH of the reaction solution were adjusted to be maintained during the continuation of the charging and mixing and stirring. The slurry containing the black composite oxide particle thus obtained was naturally cooled, then neutralized to a pH of 6 using dilute sulfuric acid, and then subjected to washing, dehydration, and drying according to a conventional method to obtain a final black composite oxide particle.

The black composite oxide particles obtained in Examples 1 to 8 and Comparative Examples 1 to 10 were evaluated for the following points. The results are shown in Table 1 (Examples 1 to 8) and Table 2 (Comparative Examples 1 to 10).

<Content of Metal Component in Black Composite Oxide Particle>

The content of the metal component in the black composite oxide particle was determined by chemical analysis (ICP). Specifically, first, 0.2 g of the black composite oxide particle was weighed, 60 ml of pure water, 20 ml of 1 N hydrochloric acid, and 20 ml of 1 N nitric acid were added thereto, and the mixture was heated to prepare an aqueous solution in which the black composite oxide particle was completely dissolved. The obtained aqueous solution was set in an ICP analyzer (ICPS-1000IV, manufactured by Shimadzu Corporation), and the contents of Fe, Mg, and Al as metal components were measured.

<Content of Cl in Raw Material or Black Composite Oxide Particle>

The content of Cl in the raw material or the black composite oxide particle was measured by performing combustion ion chromatography under the following conditions.

- Combustion device: AQF-2100H manufactured by Mitsubishi Chemical Analytech Co., Ltd.
- Amount of sample: 50 mg
- Combustion temperature: 1100°C
- Combustion time: 10 minutes
- Ar flow rate: 400 ml/min
- $O_2$ flow rate: 200 ml/min
- Humidification air flow rate: 100 ml/min
- Absorbent solution: eluent containing 1% of hydrogen peroxide
- Analyzer: IC-2010 manufactured by Tosoh Corporation
- Column: TSKgel SuperIC-Anion HS (4.6 mm I.D. $\times$ 1 cm + 4.6 mm I.D. $\times$ 10 cm)
- Eluent: $NaHCO_3$ (3.8 mmol/L) + $Na_2CO_3$ (3.0 mmol/L)
- Flow rate: 1.5 mL/min
- Column temperature: 40°C
- Injection amount: 30 $\mu$L
- Measurement mode: suppressor method
- Detector: CM detector
- Standard sample: anion-mixed standard solution manufactured by KANTO CHEMICAL CO., INC.

<Full Width at Half Maximum of Diffraction Peak Based on (311) Plane Representing Spinel Structure>

The full width at half maximum (°, 2θ) of the diffraction peak based on the (311) plane, which was a main peak of a spinel phase, was measured by using a powder X-ray diffraction method. The measurement conditions are shown below.

- X-ray diffraction device: X'pertMPD (including a high-speed detector) manufactured by PANalytical
- Radiation source: Co-K$\alpha$
- Tube voltage: 45 kV
- Tube current: 40 mA
- Scanning mode: general batch
- Divergence slit (°): 1/2
- Receiving slit (mm): 5.5
- Measurement interval: 0.010°/sec
- Count time (sec): 10.16/step
- Scanning range (2θ): 15° to 90°

<Particle Size Distribution>

The particle size distribution of the black composite oxide particle was measured by using a laser diffraction scattering method. First, 10 g of the black composite oxide particle and 80 ml of water were charged into a 100 ml beaker, and two drops of sodium hexametaphosphate were added as a dispersant. Next, the black composite oxide particle was dispersed using an ultrasonic homogenizer (UH-150 type, manufactured by SMT Co., Ltd.). In this case, an output level of the ultrasonic homogenizer was set to 4, and the dispersion was performed for 20 seconds. Thereafter, bubbles generated on a surface of the beaker were removed, and the obtained slurry was introduced into a laser diffraction type particle size distribution measuring device (SALD-7500nano, manufactured by Shimadzu Corporation) to perform the measurement. In this measurement, a 50% diameter (volume cumulative 50% particle diameter D50) and a 90% diameter (volume cumulative 90% particle diameter D90) in the volume particle size distribution were determined. Measurement conditions were set to a pump speed of 7, an internal ultrasonic irradiation time of 30, and a refractive index of 1.70-050i.

<BET Specific Surface Area>

The BET specific surface area of the black composite oxide particle was measured using a specific surface area measuring device (Macsorb HM model-1208, manufactured by Mountech Co., Ltd.). First, about 10 g of the black composite oxide particle was placed on medicine packaging paper and degassed with a vacuum dryer to confirm that a degree of vacuum was -0.1 MPa or less. Thereafter, the black composite oxide particle was heated at 200°C for 2 hours to remove moisture adhering to the surface of the black composite oxide particle. About 0.5 g to 4 g of the black composite oxide particle from which moisture had been removed was charged into a standard sample cell dedicated to the measuring device, and accurately weighed with a precision balance. Next, the weighed black composite oxide particle was set in a measurement port of the measuring device and was subjected to the measurement. The measurement was performed by using a single-point method. The measurement atmosphere was a temperature of 20°C and a relative humidity of 55%.

<Saturation Magnetization>

A cell having an inner diameter of 5 mm and a height of 2 mm was filled with the black composite oxide particle and set in a vibrating sample magnetic measuring device (VSM-C7-10A, manufactured by TOEI INDUSTRY CO., LTD.) to measure the saturation magnetization of the black composite oxide particle in a load magnetic field of 79.6 kA/m.

<Volume Resistivity>

First, a cylinder made of fluororesin having a cross-sectional area of 4 cm$^2$ was filled with the black composite oxide particle so as to have a height of 4 mm. Thereafter, electrodes were attached to both ends, and a weight of 1 kg was placed thereon to measure an electrical resistance. The electrical resistance was measured by measuring the resistance 60 seconds after applying a measurement voltage of 1000 V with a 2182A-type nanovolt meter manufactured by Keithley Instruments, and the volume resistivity was calculated. Note that, the measurement environment was set to a normal temperature and a normal humidity (temperature: 20°C, relative humidity: 55%), a high temperature and a high humidity (temperature: 30°C, relative humidity: 80%), and a low temperature and a low humidity (temperature: 10°C, relative humidity: 20%), and common logarithm values of each volume resistivity (normal temperature and normal humidity: RvN, high temperature and high humidity: RvH, low temperature and low humidity: RvL) were determined. An environmental variation ratio ($\log_{10}$RvL/$\log_{10}$RvH) was calculated using these values.

<Blackness and Hue>

The blackness and the hue of the black composite oxide particle were measured in accordance with JIS K5101-1991. Specifically, first, 1.4 cc of castor oil was added to 2.0 g of the black composite oxide particle, and the mixture was kneaded using a Hoover-type muller. 7.5 g of lacquer was added to 2.0 g of this kneaded sample, and after further kneading, the kneaded product was applied onto mirror coated paper using a 4 mil applicator and dried. Thereafter, the blackness (L value) and the hue (a value and b value) were measured using a color difference meter (Color Analyzer TC-1800, manufactured by Tokyo Denshoku. co., Ltd.).

[Table 1]

Table 1

| Example | | 1 | 2 | 3 | 4 | 5 | 6 | 7 | 8 |
|---|---|---|---|---|---|---|---|---|---|
| Element composition | Fe W1 [wt%] | 49.0 | 49.1 | 48.9 | 42.0 | 58.8 | 42.9 | 52.5 | 51.5 |
| | Mg W2 [wt%] | 6.9 | 7.0 | 6.9 | 9.9 | 4.1 | 11.0 | 4.0 | 9.5 |
| | Al W3 [wt%] | 8.7 | 8.7 | 8.8 | 11.0 | 4.1 | 9.1 | 9.1 | 4.0 |
| | W2/W1 | 0.14 | 0.14 | 0.14 | 0.24 | 0.07 | 0.26 | 0.08 | 0.18 |
| | W3/W1 | 0.18 | 0.18 | 0.18 | 0.26 | 0.07 | 0.21 | 0.17 | 0.08 |
| | W3/W2 | 1.25 | 1.24 | 1.27 | 1.11 | 1.01 | 0.83 | 2.28 | 0.42 |
| | Cl [ppm] | 21 | 7 | 96 | 17 | 27 | 17 | 23 | 22 |
| Full width at half maximum [deg] on (311) plane | | 0.138 | 0.140 | 0.144 | 0.174 | 0.100 | 0.187 | 0.107 | 0.157 |
| Particle diameter distribution | D50 [μm] | 0.16 | 0.19 | 0.15 | 0.18 | 0.14 | 0.15 | 0.17 | 0.15 |
| | D90 [μm] | 0.54 | 0.75 | 0.55 | 0.61 | 0.58 | 0.64 | 0.67 | 0.59 |
| BET specific surface area S | | 20.3 | 16.8 | 21.8 | 16.8 | 23.3 | 21.2 | 19.0 | 20.1 |
| Saturation magnetization [$Am^2$/kg) | | 21.1 | 22.0 | 19.3 | 13.1 | 29.4 | 14.2 | 24.8 | 27.1 |
| Volume resistivity [Ωcm] | $log_{10}$ RvN | 7.9 | 8.1 | 7.2 | 8.0 | 7.1 | 8.1 | 7.3 | 7.5 |
| | $log_{10}$ RvL | 8.3 | 8.6 | 7.5 | 8.3 | 7.5 | 8.4 | 7.7 | 7.9 |
| | $log_{10}$ RvH | 7.3 | 7.7 | 6.5 | 7.6 | 6.7 | 7.6 | 6.7 | 7.0 |
| | Environmental variation ratio | 1.14 | 1.12 | 1.15 | 1.09 | 1.12 | 1.11 | 1.15 | 1.13 |
| Blackness and hue | L | 15.3 | 15.7 | 15.4 | 18.3 | 17.6 | 19.5 | 17.4 | 16.5 |
| | a | 1.1 | 1.3 | 1.1 | 0.8 | 1.3 | 0.5 | 0.3 | 0.6 |
| | b | 1.8 | 1.7 | 1.9 | 2.0 | 0.7 | 1.9 | 1.7 | 0.8 |

[Table 2]

Table 2

| Comparative Example | | 1 | 2 | 3 | 4 | 5 | 6 | 7 | 8 | 9 | 10 |
|---|---|---|---|---|---|---|---|---|---|---|---|
| Element composition | Fe W1 [wt%] | 49.2 | 49.0 | 62.6 | 39.8 | 42.8 | 55.6 | 44.2 | 55.4 | 49.0 | 49.6 |
| | Mg W2 [wt%] | 7.0 | 7.0 | 2.9 | 11.2 | 8.2 | 7.3 | 12.2 | 3.1 | 7.0 | 3.1 |
| | Al W3 [wt%] | 8.5 | 8.6 | 2.4 | 11.2 | 12.1 | 3.2 | 6.8 | 7.8 | 8.7 | 4.2 |
| | W2/W1 | 0.14 | 0.14 | 0.05 | 0.28 | 0.19 | 0.13 | 0.28 | 0.06 | 0.14 | 0.06 |
| | W3/W1 | 0.17 | 0.18 | 0.04 | 0.28 | 0.28 | 0.06 | 0.15 | 0.14 | 0.18 | 0.08 |
| | W3/W2 | 1.21 | 1.23 | 0.85 | 1.00 | 1.47 | 0.44 | 0.55 | 2.47 | 1.24 | 1.35 |
| | Cl [ppm] | 122 | 2 | 29 | 15 | 17 | 25 | 18 | 25 | 23 | 2 |
| Full width at half maximum [deg] on (311) plane | | 0.136 | 0.140 | 0.083 | 0.188 | 0.158 | 0.161 | 0.195 | 0.094 | 0.211 | 0.322 |
| Particle diameter distribution | D50 [μm] | 0.16 | 0.16 | 0.18 | 0.17 | 0.19 | 0.17 | 0.16 | 0.16 | 0.18 | 0.15 |
| | D90 [μm] | 0.67 | 0.77 | 0.71 | 0.65 | 0.77 | 0.64 | 0.62 | 0.59 | 0.63 | 0.45 |
| BET specific surface area S | | 20.3 | 20.1 | 17.9 | 19.1 | 16.6 | 17.1 | 20.1 | 19.4 | 16.5 | 73.3 |

(continued)

| Comparative Example | | 1 | 2 | 3 | 4 | 5 | 6 | 7 | 8 | 9 | 10 |
|---|---|---|---|---|---|---|---|---|---|---|---|
| Saturation magnetization Am$^2$/kg] | | 20.3 | 20.5 | 36.1 | 10.8 | 14.1 | 32.3 | 15.6 | 32.6 | 14.3 | 38.1 |
| Volume re-sistivity [Ωcm] | $\log_{10}$ RvN | 6.8 | 8.0 | 6.7 | 7.8 | 7.4 | 7.7 | 8.2 | 6.8 | 8.8 | 6.1 |
| | $\log_{10}$ RvL | 7.3 | 9.0 | 7.1 | 8.3 | 7.9 | 8.1 | 8.5 | 7.2 | 9.3 | 6.9 |
| | $\log_{10}$ RvH | 5.7 | 7.1 | 6.2 | 7.3 | 7.0 | 7.3 | 7.6 | 6.2 | 8.0 | 5.1 |
| | Environmental variation ratio | 1.28 | 1.27 | 1.15 | 1.14 | 1.13 | 1.11 | 1.12 | 1.16 | 1.16 | 1.35 |
| Blackness and hue | L | 18.3 | 16.2 | 15.3 | 27.3 | 21.1 | 17.1 | 23.3 | 17.1 | 29.3 | 18.5 |
| | a | 0.4 | 0.5 | 1.4 | 0.7 | 0.5 | 0.4 | 0.5 | 1.3 | 2.4 | -0.3 |
| | b | 1.8 | 1.3 | 0.2 | 4.3 | 4.3 | 0.5 | 2.1 | 3.0 | 4.4 | 0.2 |

As seen from the above results, the black composite oxide particles obtained in Examples 1 to 8 have high safety, excellent blackness, low magnetization, and a small environmental variation in volume resistivity.

INDUSTRIAL APPLICABILITY

According to the present invention, it is possible to provide a black composite oxide particle having high safety, excellent blackness, low magnetization, and a small environmental variation in volume resistivity.

The present invention has been described in detail with reference to specific embodiments, but it is apparent to those skilled in the art that various changes and modifications can be made without departing from the spirit and scope of the present invention.

Note that, the present application is based on a Japanese patent application (Japanese Patent Application No. 2023-045378) filed on March 22, 2023, and the contents thereof are incorporated herein by reference.

**Claims**

1. A black composite oxide particle comprising:

   Fe, Mg, and Al as metal components, wherein
   when a content of Fe is W1 wt%, a content of Mg is W2 wt%, and a content of Al is W3 wt%, the following formulas:

$$42 \leq W1 \leq 60,$$

$$4 \leq W2 \leq 11,$$

   and

$$4 \leq W3 \leq 11$$

   are satisfied,
   a full width at half maximum of a diffraction peak based on a (311) plane representing a spinel structure in X-ray crystal structure analysis is 0.100° or more and 0.190° or less, and
   Cl is further contained in an amount of 5 ppm or more and 100 ppm or less.

2. The black composite oxide particle according to claim 1, which satisfies the following formulas:

$$0.07 \leq W2/W1 \leq 0.26,$$

$$0.07 \leq W3/W1 \leq 0.26,$$

and

$$0.4 \leq W3/W2 \leq 2.3.$$

3. The black composite oxide particle according to claim 1, wherein

with a laser diffraction scattering method, a volume cumulative 50% particle diameter D50 is 0.05 $\mu$m or more and 0.7 $\mu$m or less, and a volume cumulative 90% particle diameter D90 is 1.0 $\mu$m or less, and the volume cumulative 50% particle diameter D50 and a BET specific surface area S satisfy the following formula: $1.3935 \times D50^{-1.144} \leq S \leq 3.5303 \times D50^{-0.974}$.

4. The black composite oxide particle according to claim 1, which has an L value of 20 or less, an a value of 2.0 or less, and a b value of 2.0 or less, when measured for blackness and a hue using a color difference meter in accordance with JIS K5101-1991.

5. The black composite oxide particle according to claim 1, which has a saturation magnetization Ms of 30 Am$^2$/kg or less in a load magnetic field of 79.6 kA/m.

6. The black composite oxide particle according to claim 1, which has a common logarithm value of volume resistivity RvH ($\Omega$cm) of 7.0 or more at a high temperature and a high humidity (30°C and relative humidity of 80%).

7. The black composite oxide particle according to claim 1, which has a volume resistivity environmental variation ratio ($\log_{10}$RvL/$\log_{10}$RvH) of 1.00 or more and 1.25 or less, which is a ratio of a common logarithm value of volume resistivity RvL ($\Omega$cm) at a low temperature and a low humidity (10°C and relative humidity of 20%) to a common logarithm value of volume resistivity RvH ($\Omega$cm) at a high temperature and a high humidity (30°C and relative humidity of 80%).

## INTERNATIONAL SEARCH REPORT

| International application No. |
| --- |
| **PCT/JP2024/011448** |

| A. | CLASSIFICATION OF SUBJECT MATTER |
| --- | --- |

*C01G 49/00*(2006.01)i; *C09C 1/02*(2006.01)i; *C09C 1/22*(2006.01)i; *C09C 1/40*(2006.01)i
FI: C01G49/00 A; C09C1/02; C09C1/22; C09C1/40

According to International Patent Classification (IPC) or to both national classification and IPC

| B. | FIELDS SEARCHED |
| --- | --- |

Minimum documentation searched (classification system followed by classification symbols)

C01G49/00; C09C1/02; C09C1/22; C09C1/40; G03G9/083; G03G9/087

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2003-238164 A (MITSUI MINING & SMELTING CO., LTD.) 27 August 2003 (2003-08-27) entire text, all drawings | 1-7 |
| A | JP 09-211897 A (CANON KABUSHIKI KAISHA) 15 August 1997 (1997-08-15) entire text, all drawings | 1-7 |
| A | JP 2011-075918 A (DOWA ELECTRONICS MATERIALS CO., LTD.) 14 April 2011 (2011-04-14) entire text, all drawings | 1-7 |
| A | JP 2008-044805 A (TODA KOGYO CORP.) 28 February 2008 (2008-02-28) entire text | 1-7 |
| A | JP 2018-162423 A (POWDERTECH CO., LTD.) 18 October 2018 (2018-10-18) entire text | 1-7 |

| ☐ Further documents are listed in the continuation of Box C. | ☑ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **14 May 2024** | **28 May 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/011448**

| Patent document cited in search report | | | Publication date (day/month/year) | Patent family member(s) | | | Publication date (day/month/year) |
|---|---|---|---|---|---|---|---|
| JP | 2003-238164 | A | 27 August 2003 | US<br>entire text, all drawings<br>WO<br>EP | 2005/0152828<br><br>2003/053853<br>1466868 | A1<br><br>A1<br>A1 | |
| JP | 09-211897 | A | 15 August 1997 | (Family: none) | | | |
| JP | 2011-075918 | A | 14 April 2011 | (Family: none) | | | |
| JP | 2008-044805 | A | 28 February 2008 | (Family: none) | | | |
| JP | 2018-162423 | A | 18 October 2018 | US<br>entire text<br>WO<br>EP<br>CN | 2020/0003268<br><br>2018/110563<br>3553148<br>110072965 | A1<br><br>A1<br>A1<br>A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003238164 A
- JP 2003286030 A
- JP 2015098509 A
- JP 2023045378 A